(19) **Europäisches Patentamt / European Patent Office / Office européen des brevets**

(11) **EP 3 036 818 B1**

(12) **FASCICULE DE BREVET EUROPEEN**

(45) Date de publication et mention
de la délivrance du brevet:
**05.08.2020 Bulletin 2020/32**

(21) Numéro de dépôt: **14742250.5**

(22) Date de dépôt: **24.07.2014**

(51) Int Cl.:
**H02J 7/00** [(2006.01)]

(86) Numéro de dépôt international:
**PCT/EP2014/065976**

(87) Numéro de publication internationale:
**WO 2015/024731 (26.02.2015 Gazette 2015/08)**

(54) **DISPOSITIF D'EQUILIBRAGE DE CHARGE DES ELEMENTS D'UNE BATTERIE DE PUISSANCE**

VORRICHTUNG ZUM AUSGLEICH DER LADUNG VON ELEMENTEN EINER STROMBATTERIE

DEVICE FOR BALANCING THE CHARGE OF THE ELEMENTS OF A POWER BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.08.2013 FR 1358062**

(43) Date de publication de la demande:
**29.06.2016 Bulletin 2016/26**

(73) Titulaire: **Commissariat à l'Energie Atomique et
aux Energies
Alternatives
75015 Paris (FR)**

(72) Inventeurs:
• **MERCIER, Sylvain
F-38120 Saint Egreve (FR)**
• **CHATROUX, Daniel
F-38470 Teche (FR)**
• **DESBOIS-RENAUDIN, Matthieu
F-38250 Villard de Lans (FR)**
• **GARNIER, Laurent
F-69970 Marennes (FR)**

(74) Mandataire: **GIE Innovation Competence Group
310, avenue Berthelot
69372 Lyon Cedex 08 (FR)**

(56) Documents cités:
**FR-A1- 2 982 090      US-A1- 2005 017 682
US-A1- 2007 279 003**

• **GEORGE ALTEMOSE ET AL: "Active cell
balancing system using an isolated share bus for
Li-Ion battery management: Focusing on satellite
applications", SYSTEMS, APPLICATIONS AND
TECHNOLOGY CONFERENCE (LISAT), 2011
IEEE LONG ISLAND, IEEE, 6 mai 2011
(2011-05-06), pages 1-7, XP031880716, DOI:
10.1109/LISAT.2011.5784237 ISBN:
978-1-4244-9878-9**

## Description

L'invention concerne un dispositif d'équilibrage de charge pour batterie de puissance à accumulateurs électrochimiques.

Les systèmes électriques de forte puissance à tension continue connaissent un développement important. En effet, de nombreux systèmes de transport incluent une alimentation de tension continue.

Les véhicules hybrides combustion/électrique ou électriques incluent notamment des batteries de forte puissance. De telles batteries sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion (Li-ion) pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :

3.3 V pour une technologie lithium-ion phosphate de Fer, LiFePO4,
4.2 V pour une technologie de type lithium-ion à base d'oxyde de cobalt. L'invention peut également s'appliquer à des super-condensateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par son processus électrochimique. Dans un circuit utilisant plusieurs étages d'accumulateur(s), le courant circulant à travers les étages est le même. Le niveau de charge ou de décharge des étages dépend donc des caractéristiques intrinsèques des accumulateurs. Des différences de tension entre les étages apparaissent en cours de charge ou de décharge du fait des disparités de fabrication, de vieillissement, d'assemblage et de température de fonctionnement entre les différents accumulateurs.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou le détériore. Une décharge trop profonde qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateur(s) est obligatoire lors de la charge et de la décharge pour une question de sécurité et de fiabilité. Un dispositif de surveillance est ainsi généralement disposé en parallèle de chaque étage et permet d'assurer cette fonction.

Le dispositif de surveillance a pour fonction de suivre l'état de charge (ou la charge résiduelle) de chaque étage d'accumulateur(s) et de transmettre l'information à un circuit de contrôle afin d'arrêter la charge ou la décharge de la batterie lorsqu'un étage a atteint sa tension de seuil. Cependant, sur une batterie avec plusieurs étages d'accumulateur(s) disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La capacité de chaque étage d'accumulateur(s) n'est dès lors pas exploitée, ce qui représente un problème majeur dans des applications de types transport avec batteries embarquées ayant de fortes contraintes d'autonomie. Pour palier ce problème, le dispositif de surveillance est généralement associé à un dispositif d'équilibrage de charge.

Le dispositif d'équilibrage a pour fonction d'optimiser la charge de la batterie et donc son autonomie en amenant les étages d'accumulateur(s) mis en série à un état de charge et/ou décharge identique. Il existe deux catégories de dispositifs d'équilibrage, les dispositifs d'équilibrage dits à dissipation d'énergie, ou dits à transfert d'énergie.

Avec les systèmes d'équilibrage à dissipation d'énergie, la tension aux bornes des étages est uniformisée en détournant le courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil haute.

Cependant, de tels systèmes d'équilibrage à dissipation d'énergie présentent l'inconvénient majeur de consommer plus d'énergie que nécessaire pour charger la batterie. En effet, il faut décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de la ou des charges restant à réaliser. De plus, ils dissipent l'énergie excédentaire en chaleur, ce qui n'est pas compatible avec les contraintes d'intégration dans les applications de types transport et embarquées, et ce qui induit une forte baisse de la durée de vie des accumulateurs lorsque la température s'élève.

Les systèmes d'équilibrage à transfert d'énergie échangent quand à eux de l'énergie entre les étages d'accumulateurs et la batterie auxiliaire ou un réseau auxiliaire d'énergie.

Le transfert d'énergie peut s'effectuer soit de manière unidirectionnelle, par exemple de la batterie aux étages ou des étages à la batterie, ou soit de manière bidirectionnelle de la batterie auxiliaire aux étages et des étages à la batterie auxiliaire, ou encore entre étages adjacents.

Pour limiter ou répartir la puissance fournie par un étage lors des transferts d'énergie, la demande de brevet FR2982090 décrit un dispositif d'équilibrage amélioré. Un dispositif de stockage d'énergie électrique comporte plusieurs étages connectés électriquement en série. Chaque étage est connecté à l'entrée d'un convertisseur DC/DC respectif. Chaque convertisseur fournit une tension de sortie isolée constante limitée en courant. Les sorties de convertisseurs sont connectées en parallèle au réseau auxiliaire. La valeur de tension de sortie de chaque convertisseur est définie par une consigne fournie par un dispositif de commande commun. Chaque convertisseur comprend une boucle fermée de régulation de sa tension de sortie pour fournir la tension de sortie constante définie par le circuit de commande. Plus la charge résiduelle d'un étage est élevée, plus la tension de consigne fournie par le dispositif de commande à cet étage est élevée. Par conséquent, les convertisseurs, dont les étages respectifs présentent la charge résiduelle la plus élevée, fournissent en priorité du courant aux auxiliaires par l'intermédiaire de leur sortie.

La structure des convertisseurs est relativement complexe, à l'origine d'un surcoût non négligeable. Par ailleurs, le fonctionnement du dispositif reste relativement complexe et nécessite la récupération d'informations de charge des étages, et le traitement de ces informations par le circuit de commande afin de pouvoir optimiser l'équilibrage de charge par alimentation du réseau auxiliaire. Un tel dispositif d'équilibrage de charge est en outre vulnérable en cas de dysfonctionnement du circuit de commande.

Le document US2005/017682 décrit des convertisseurs continu/continu dont l'entrée est connectée à un étage d'accumulateurs. La tension de sortie de chaque convertisseur décroit proportionnellement au courant débité jusqu'à atteindre une tension nulle. De tels convertisseurs ont leur sortie connectée à un bus commun de fixation d'une tension de référence. Par l'intermédiaire des convertisseurs bidirectionnels, les étages les plus chargés rechargent les étages les moins chargées. De tels convertisseurs incluent une résistance de sortie Rpar à l'origine d'un échauffement indésirable à proximité des batteries. L'ensemble des convertisseurs dont la tension de sortie est initialement supérieure à la tension de référence sur le bus commun, débitent simultanément du courant sur ce bus commun.

L'invention vise à résoudre un ou plusieurs de ces inconvénients. L'invention porte ainsi sur un dispositif d'équilibrage de charge d'un dispositif de stockage électrique de puissance incluant plusieurs éléments de stockage électrique connectés en série, tel que défini dans les revendications annexées. L'invention porte également sur un système d'alimentation électrique, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un exemple de système d'alimentation électrique incluant un dispositif d'équilibrage de charge mettant en œuvre l'invention ;
- la figure 2 illustre avec davantage de détails le système d'alimentation électrique de la figure 1 ;
- la figure 3 illustre des exemples de lois de commande tension de sortie/courant de sortie d'un convertisseur mis en œuvre dans un dispositif d'équilibrage de charge selon l'invention ;
- la figure 4 illustre un mode de fonctionnement simplifié d'un système d'alimentation incluant deux convertisseurs auxquels des tensions d'entrée différentes sont appliquées ;
- la figure 5 illustre un mode de fonctionnement d'un système d'alimentation comprenant un plus grand nombre de convertisseurs aux entrées desquels des accumulateurs électrochimiques ayant différents états de charge sont connectés ;
- la figure 6 est un schéma électrique d'un exemple de convertisseur pouvant être mis en oeuvre dans le cadre de l'invention ;
- la figure 7 est un exemple de circuit logique pour utiliser un convertisseur en régime de conduction continue ;
- la figure 8 est un exemple de circuit logique pour utiliser un convertisseur en régime de conduction discontinue ;
- les figures 9 illustre schématiquement un exemple de convertisseurs pour une conduction unidirectionnelle en courant ;
- la figure 10 illustre un exemple de convertisseurs pour une conduction unidirectionnelle ou bidirectionnelle en courant ;
- la figure 11 illustre différents diagrammes de décharge typiques de différentes technologies d'accumulateurs électrochimiques ;
- la figure 12 illustre en exemple de loi de commande tension de sortie/courant de sortie pour un convertisseur bidirectionnel.

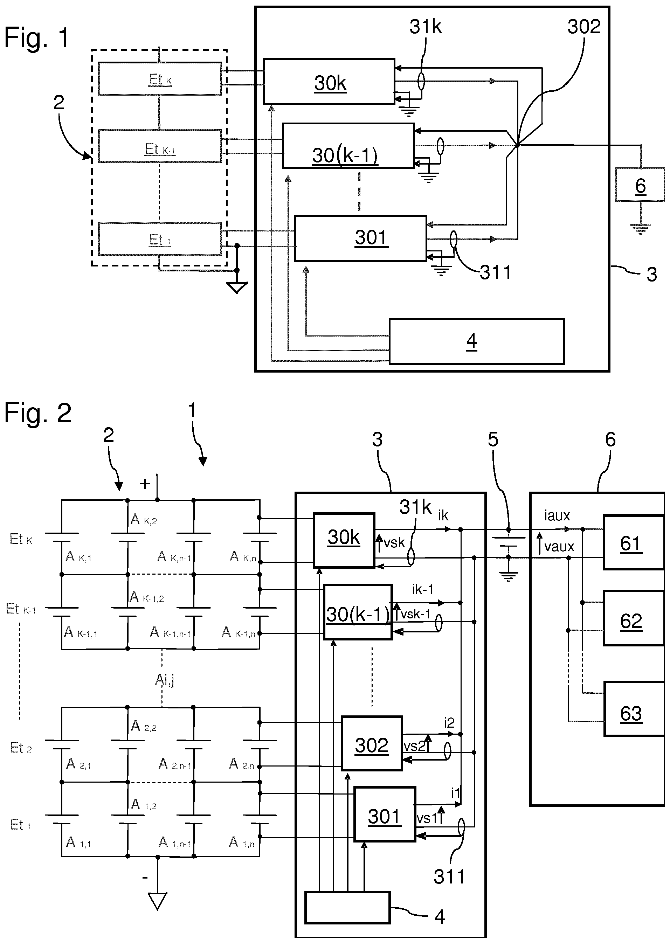

Les figures 1 et 2 sont des représentations schématiques d'un système d'alimentation électrique 1 incluant un système de stockage d'énergie électrique sous forme d'une batterie 2 de puissance. La batterie 2 comprend k étages $Et_1$ à $Et_k$, formant k éléments de stockage d'énergie électrique, connectés électriquement en série (avec k au moins égal à 2, de préférence au moins égal à 3). Chaque étage i inclut avantageusement n accumulateurs $A_{i,1}$ à $A_{i,n}$ connectés électriquement en parallèle (avec n au moins égal à 2). Le système d'alimentation électrique 1 inclut également un dispositif d'équilibrage de charge 3 de la batterie 2. La tension entre la borne positive et la borne négative de la batterie 2 présente une valeur typiquement comprise entre 100 V et 750 V, par exemple de l'ordre de 400 V. La batterie 2 est par exemple destinée à alimenter le moteur d'un véhicule hybride ou électrique en étant connectée aux bornes d'un onduleur, et est avantageusement isolée du châssis métallique d'un tel véhicule.

Le dispositif d'équilibrage 3 comprend une interface de connexion configurée pour être connectée aux bornes de chacun des étages ou éléments $Et_i$. Le dispositif d'équilibrage 3 comprend aussi une interface de connexion configurée pour être connectée à un réseau auxiliaire 6, par exemple un réseau électrique de bord d'un véhicule, dont la tension est généralement régulée à une valeur proche de 12 V. Cette tension régulée peut par exemple varier dans une plage comprise entre 10,5 V et 14 V. Cette tension régulée est typiquement au moins six fois inférieure à la tension aux bornes de la batterie 2.

Le dispositif d'équilibrage 3 comporte des convertisseurs 301 à 30k, par exemple un convertisseur par étage de la batterie 2. On peut également prévoir un convertisseur pour plusieurs étages en série de la batterie 2. Les convertisseurs 301 à 30k sont avantageusement isolés. Les convertisseurs 301 à 30k peuvent être monodirectionnels ou bidirectionnels. Comme décrit ultérieurement, les convertisseurs 301 à 30k sont destinés à la fois à assurer l'équilibrage des étages $Et_i$ de la batterie 2 (et ainsi optimiser la charge de cette batterie de puissance 2) et à alimenter le réseau auxiliaire 6, en appliquant respectivement des tensions de sortie vs1 à vsk et en fournissant des intensités de sortie i1 à ik. La sortie de chacun des convertisseurs 301 à 30k est connectée au réseau auxiliaire 6 pour appliquer une même différence de potentiel vaux aux bornes du réseau auxiliaire 6. Le dispositif d'équilibrage 3 fournit un courant iaux au réseau auxiliaire 6. Des charges auxiliaires 61 à 63 telles qu'un climatiseur ou un autoradio sont connectées au réseau 6.

Le dispositif d'équilibrage 3 inclut également un module de commande 4 connecté aux convertisseurs 30i. Le dispositif d'équilibrage 3 applique typiquement des commandes binaires d'activation ou de désactivation à chacun des convertisseurs 30i. Une batterie auxiliaire 5 (ou un condensateur, ou un super-condensateur) est avantageusement connectée aux bornes du réseau 6. La batterie auxiliaire 5 ou le condensateur permettent de stabiliser la tension aux bornes du réseau auxiliaire 6.

Les convertisseurs 301 à 30k sont conçus comme des sources de tension limitées en courant. Un convertisseur 30i présente une limitation de courant notée limax. Chaque convertisseur 30i récupère la valeur d'intensité li qu'il fournit sur sa sortie au réseau auxiliaire 6. Chaque convertisseur 30i comporte à cet effet un capteur de courant 31i mesurant le courant li qu'il fournit sur sa sortie.

Par ailleurs, chacun des convertisseurs 30i présente une loi de transformation du type :

$$Vouti = K1*Vei - f(li)$$

Avec :

Vouti la tension de sortie du convertisseur 30i ;
K1 une constante ;
Vei la tension d'entrée du convertisseur 30i ;
li le courant de sortie débité par le convertisseur 30i ;
f(li) une fonction affine du courant li.

L'utilisation d'une fonction f(li) pour la définition de la tension Vouti permet de faciliter la répartition de courant entre plusieurs convertisseurs, dans le fonctionnement détaillé par la suite.

Dans un cas particulier, f(li)=K2* li, avec K2 une constante. On peut également définir l'amplitude de la fonction f(li) de sorte que f(li)< 0,1 * K1*Veimin, avec Veimin une tension d'entrée minimale à appliquer sur l'entrée du convertisseur 30i.

La loi de commande est définie pour le courant li moyen. Avantageusement le convertisseur 30i est abaisseur de tension, ce qui implique K1<1. La constante K1 peut être fixée en fonction du nombre d'étages d'accumulateurs aux bornes desquels un convertisseur 30i est connecté, en fonction de leur technologie et en fonction de l'ordre de grandeur de la tension souhaitée sur le réseau auxiliaire 6.

Cette loi de transformation est assurée, tant que le courant débité par le convertisseur 30i est inférieur à son courant limax. Au-delà du courant limax, chacun des convertisseurs pourra fonctionner en régulation de courant. La valeur de la tension de sortie Vouti n'est ainsi pas définie par le circuit de commande 4, mais déterminée de façon autonome par le convertisseur 30i. Le système peut inclure un dispositif de surveillance non illustré, surveillant chacune des tensions Vei. Lorsque ce dispositif de surveillance identifie une tension Vei inférieure à un seuil bas ou supérieure à un seuil haut, ce dispositif peut désactiver ou activer le convertisseur Vei correspondant ou transmettre l'information au circuit de commande 4.

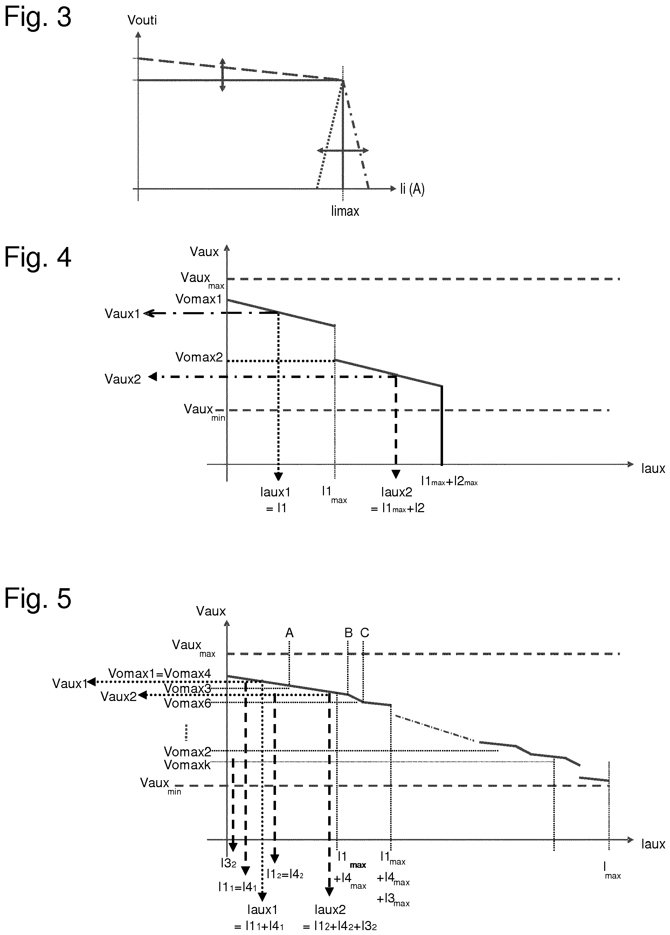

La figure 3 illustre des exemples de lois de commande tension de sortie/courant de sortie d'un convertisseur 30i pour une valeur donnée de la tension d'entrée de ce convertisseur. Jusqu'à limax, la courbe en trait plein correspond au cas où la fonction f(Ii)=K2*Ii. Au-delà, de limax, une régulation en courant de sortie peut être effectuée à coefficient constant (trait plein), à coefficient rentrant ou à coefficient sortant, comme illustré.

Le fonctionnement du système d'alimentation électrique 1 va maintenant être détaillé. Dans un souci de simplification, la batterie auxiliaire 5 n'est pas connectée au réseau 6. On supposera que les tensions d'entrée aux bornes des convertisseurs ont un même ordre de grandeur, du fait notamment d'un même nombre d'étages d'accumulateurs électrochimiques connectés en série et de technologie d'accumulateurs identique. Les convertisseurs 30i utilisés par la suite présentent une régulation en courant de sortie à coefficient constant, et une régulation en tension de sortie du type Vouti=K1*Vei -f (Ii) avec f(Ii)=K2*Ii + K3, K3 étant une constante strictement positive.

La méthode de régulation de la tension sur le réseau 6 proposée par l'invention tire profit de la tolérance du niveau de tension du réseau 6, et éventuellement de la batterie auxiliaire 5, dont les tensions nominales peuvent varier d'environ 10,5 V à 14 V, correspondant respectivement aux valeurs Vaux$_{max}$ et Vaux$_{min}$ illustrées à la figure 4.

Le fonctionnement détaillé dans le diagramme de la figure 4 correspond à un cas simplifié avec seulement deux convertisseurs 301 et 302 présentant une même loi de transformation. La tension d'entrée Ve1 du convertisseur 301 est supérieure à la tension d'entrée Ve2 du convertisseur 302 (l'état de charge des accumulateurs de l'étage connecté à l'entrée du convertisseur 301 est supérieur à l'état de charge des accumulateurs de l'étage et2 connecté à l'entrée du convertisseur 302). Par conséquent, la tension de sortie Vout1 du convertisseur 301 est supérieure à la tension de sortie Vout2 du convertisseur 302. La tension Vomax1 correspond à la tension de sortie à vide du convertisseur 301. La tension Vomax2 correspond à la tension de sortie à vide du convertisseur 302.

Dans un premier cas de figure (flèche en pointillés), le courant I$_{aux}$ appelé par le réseau 6 est inférieur à la limitation I1$_{max}$. Le convertisseur 301 fournit ainsi l'intégralité du courant I$_{aux1}$ et impose sa tension de sortie Vout1 =Vaux1 comme tension Vaux sur le réseau 6. Ici, Vaux1 >Vomax2, donc le convertisseur 302 ne contribue pas au courant I$_{aux}$.

Dans un second cas de figure (flèches en traits discontinus), le courant I$_{aux}$ appelé par le réseau 6 est supérieur à la limite I1$_{max}$ mais inférieur à la limite I1$_{max}$ + I2$_{max}$. Comme I$_{aux}$ est supérieur à la limite I1$_{max}$, la tension de sortie Vout1 baisse alors en deçà de Vomax2 (régulation en courant du convertisseur 301). Le convertisseur 301 fournit son courant I1= I1$_{max}$. La tension de sortie Vaux baisse jusqu'à une valeur Vaux2, de sorte que I$_{aux2}$ = I1$_{max}$ + I2. Le convertisseur 302 fournit ainsi le courant I2 complémentaire selon sa loi de transformation (régulation en tension).

On répartit ainsi le courant sur les différents étages en déchargeant prioritairement les étages les plus chargés, ce qui contribue à équilibrer les charges entre les étages. De plus, un tel équilibrage est réalisé en alimentant le réseau 6, l'utilisation de tels courants d'équilibrage étant ainsi optimisée pour limiter les pertes inutiles par dissipation. Par ailleurs, plus l'écart entre les tensions de sortie des convertisseurs est important et plus le courant auxiliaire est fourni prioritairement par le convertisseur connecté à un étage le plus chargé. En outre, un tel dispositif d'équilibrage 3 se dispense de boucles de régulation complexes interdépendantes au niveau des convertisseurs, et évite par ailleurs de faire appel à de complexes interfaces de communication adaptées aux niveaux de tension des différents étages.

Les convertisseurs 301 et 302 comportent ici une même limite d'intensité limax. Cependant, des convertisseurs présentant différentes limites d'intensité limax peuvent bien entendu être utilisés dans le cadre de l'invention.

Le fonctionnement détaillé dans le diagramme de la figure 5 correspond à un cas plus complexe avec un nombre important de convertisseurs 30i, ou un cas où les accumulateurs électrochimiques des différents étages ont une faible variation de tension en fonction de leur état de charge. Dans un tel cas de figure, un recouvrement entre les tensions de sortie de plusieurs convertisseurs 30i est probable. Les convertisseurs 30i présentent une même loi de transformation.

Sur une zone de recouvrement, les convertisseurs sont sollicités en fonction de leur tension de sortie à vide, en fonction de leur pente de décroissance (constante K2) et en fonction de la tension auxiliaire vaux.

Dans l'exemple, les convertisseurs 1 et 4 sont connectés à des étages au même état de charge et on donc des tensions à vide Vomax1 et Vomax4 identiques. Pour exemple, pour un courant Iaux compris entre un courant nul et le courant correspondant au point A, les convertisseurs 301 et 304 fournissent chacun des courants I1 et I4 identiques (déterminés à partir de la loi de transformation individuelle de chacun de ces convertisseurs, non illustrée).

Pour un courant Iaux compris entre le point A et le point B, les convertisseurs 301, 303 et 304 fournissent des courants répartis selon la tension Vaux, selon la constante K2 et selon leurs tensions à vides respectives. Le point A est défini comme le point pour lequel la tension Vaux est égale à la tension à vide Vomax3. Les convertisseurs 301 et 304 fournissent chacun un courant I1$_2$ (I4$_2$)= égal à (Vomax1-Vaux)/K2. Le convertisseur fournit :

$$I3_2 = Iaux2 - I1_2 - I4_2$$

Le point B est défini comme le point pour lequel la tension Vaux est égale à Vomax1-K2 * I1max.

Entre B et C, les convertisseurs 301 et 304 fournissent chacun des courants I1$_{max}$ et I4$_{max}$ identiques. Le convertisseur 303 fournit le courant complémentaire pour atteindre une valeur iout3.

Le point C est défini comme le point pour lequel la tension Vaux est égale à la tension Vomax6.

Ainsi, en cas de recouvrement des convertisseurs les plus chargés, ceux-ci ne sont pas sollicités indépendamment jusqu'à leur limitation de courant.

Avec un convertisseur 30i dont la loi de transformation est connue, on peut déterminer la tension appliquée sur son entrée à partir de sa tension de sortie. On peut alors en déduire l'état de charge de l'étage connecté à cette entrée. Par conséquent, on peut déterminer l'état de charge des différents étages en déterminant à quels moments ils alimentent le réseau auxiliaire 6.

Par ailleurs, la surveillance de la tension des étages de la batterie de puissance 2 peut avantageusement être réalisée par des mesures des tensions de sortie des convertisseurs 30i. Ainsi, une communication entre un dispositif de surveillance de ces niveaux de tension et un circuit de commande disposé à un niveau basse tension est facilitée.

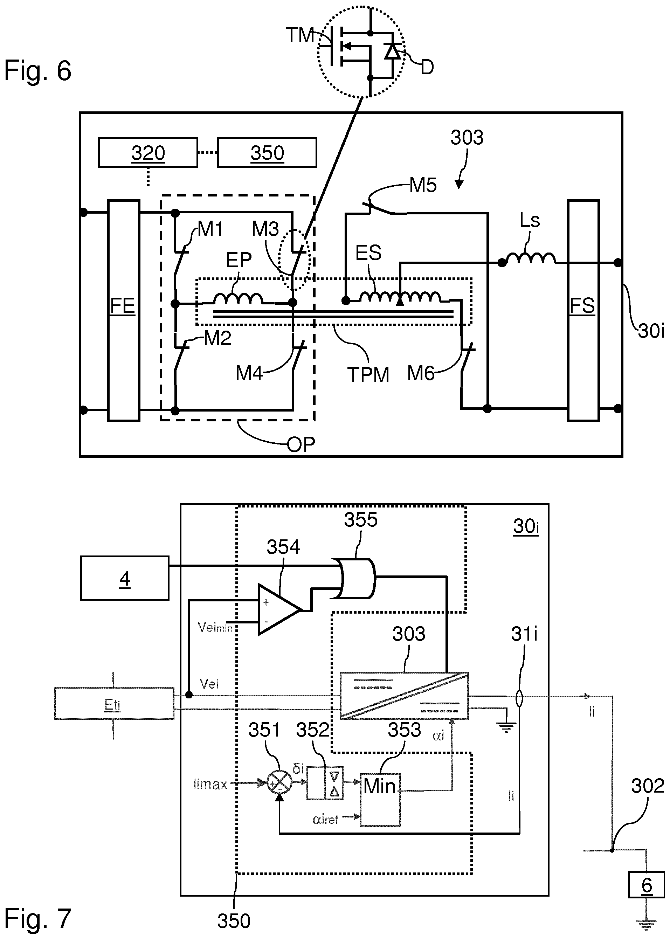

La figure 6 illustre un exemple de convertisseur 30i particulièrement avantageux pour un dispositif d'équilibrage selon l'invention. Le convertisseur 30i comporte un filtre d'entrée FE connecté à l'interface de connexion d'entrée. La sortie du filtre FE est connectée à un onduleur à pont complet OP d'un circuit de conversion DC/DC 303. L'onduleur à pont complet inclut des interrupteurs commandés M1, M2, M3 et M4. Le circuit de conversion DC/DC comporte également un transformateur à point milieu au secondaire TPM. Le transformateur TPM comporte un enroulement primaire EP connecté en pont entre les interrupteurs M1 à M4. Les interrupteurs M1 à M4 sont commandés en modulation de largeur d'impulsion par un circuit de pilotage 320, afin de définir le niveau de tension de sortie. Le convertisseur 30i comprend en outre un redresseur synchrone incluant des interrupteurs commandés M5 et M6. L'enroulement secondaire ES est connecté entre les interrupteurs M5 et M6. Le circuit de pilotage 320 peut lui-même recevoir des valeurs de consigne d'un circuit de régulation 350, dont des exemples sont détaillés par la suite.

Le transformateur à point milieu TPM permet de minimiser le nombre d'interrupteurs au secondaire pour assurer le redressement du signal. Les interrupteurs commandés M1 à M6 sont commandés par le circuit de pilotage 320. Les interrupteurs commandés M1 à M6 peuvent présenter la structure illustrée : un transistor TM de type nMOS avec une diode de roue libre D connectée en parallèle. De tels interrupteurs M5 et M6 sont à privilégier en lieu et place d'un redressement par l'intermédiaire de diodes afin de maximiser le rendement du circuit de conversion 303. L'utilisation de transistors MOSFET permet par ailleurs d'assurer un fonctionnement bidirectionnel du convertisseur 30i.

Un filtre de sortie FS a ses entrées connectées entre le point milieu de l'enroulement secondaire (par l'intermédiaire d'une inductance de stockage Ls) et un nœud commun aux interrupteurs M5 et M6. Les sorties du filtre FS forment l'interface de sortie du convertisseur 30i.

Pour la mise en œuvre d'une loi de transformation de type Vouti=K1*Vei -f (Ii), un régime de fonctionnement possible pour un circuit de conversion 303 peut être un régime de conduction continue, fonctionnement applicable à tout convertisseur bidirectionnel en courant, par exemple un convertisseur tel que détaillée en référence à la figure 6. Pour un régime de conduction continue, le circuit de conversion 303 peut être commandé à rapport cyclique constant, tant que la limite de courant Iimax n'est pas atteinte.

Par application au circuit de conversion 303 de la figure 6, avec une tension d'entrée Vei de 50V, avec f(Ii)=0, un rapport de transformation RT de 2/3 du transformateur à point milieu TPM, un rapport cyclique airef de conduction des interrupteurs M1, M2, M3 et M4 de 0,2, on obtient une tension de sortie Vouti régulée de Vouti=Vei*RT*$\alpha$iref=13,3V, soit K1= RT*$\alpha$iref

Une fréquence de découpage de 260KHz des interrupteurs M1, M2, M3 et M4 peut par exemple être utilisée.

La figure 7 illustre un exemple de convertisseur 30i destiné à mettre en œuvre un régime de conduction continue. Le circuit de pilotage est ici intégré dans le circuit de conversion DC/DC 303.

Le convertisseur 30i inclut un circuit de conversion continu/continu 303 comportant avantageusement une isolation galvanique. Le convertisseur 30i comprend en outre un circuit de régulation 350. Le circuit de régulation 350 génère un rapport cyclique ai dont la valeur est comprise entre 0 et 1. Le circuit de régulation 350 applique sa consigne de rapport cyclique ai sur le circuit de pilotage du circuit de conversion 303. Le circuit de régulation 350 n'utilise ici pas une boucle fermée de régulation de tension, une limitation du courant de sortie s'avérant suffisante.

Le circuit de régulation 350 comporte un soustracteur 351 recevant le courant Ii mesuré par le capteur de courant 31i sur une entrée inverseuse, et le courant Iimax sur une entrée non inverseuse. Le soustracteur 351 génère ainsi un signal d'écart de courant $\delta$i pour mettre en œuvre une boucle fermée de limitation de courant. $\delta$i est appliqué à l'entrée d'un correcteur 352, destiné à élaborer une valeur de rapport cyclique à partir de ce signal, en limitant la valeur du rapport cyclique élaborée entre une valeur minimale et une valeur maximale. Ce correcteur 352 est par exemple du type PI (proportionnel intégral). La sortie du correcteur 352 est appliquée à l'entrée d'un circuit 353. Une valeur de rapport cyclique de référence airef est par ailleurs appliquée sur une autre entrée du circuit 353. Le circuit 353 fournit en sortie la valeur ai, égale à la minimale entre les deux valeurs appliquées sur son entrée. Ainsi, tant que la limitation de courant n'est pas atteinte ou approchée, ai est fixé à la valeur airef. La valeur de airef définit la boucle ouverte de régulation de tension de sortie. Dès que le courant atteint ou approche limax, la valeur ai est définie par le correcteur 352 et donc abaissée, afin de diminuer la tension de sortie du circuit de conversion 303.

Le circuit de commande 4 fournit ici seulement un signal binaire d'activation ou de désactivation, appliqué sur une entrée d'une porte OU 355. Une autre entrée de la porte OU 355 est connectée à la sortie d'un comparateur 354. Le signal de sortie du comparateur 354 est appliqué sur le circuit de conversion 303 et permet ainsi d'activer ou de désactiver le convertisseur 30i. Le comparateur 354 permet de désactiver le convertisseur 30i si la tension appliquée à son entrée par l'étage Eti est inférieure au seuil bas Veimin.

Dans cet exemple, f(li)=0, mais on peut également prévoir une diminution du rapport cyclique appliqué sur le circuit de conversion 303, en fonction de la valeur li mesurée par le capteur 31i, afin d'obtenir une décroissance de la tension de sortie avec l'augmentation de la valeur li. Ainsi, des convertisseurs 30i commandés indépendamment avec des mêmes tensions de sortie répartissent de façon homogène leur contribution au courant $i_{aux}$.

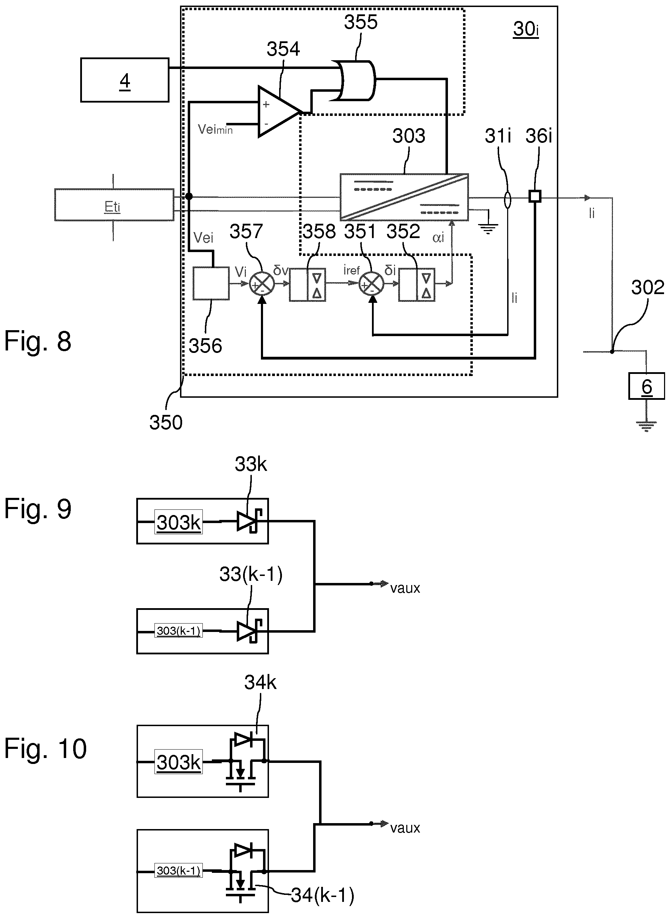

La figure 8 illustre un exemple de convertisseur 30i destiné à mettre en œuvre un régime de conduction discontinue. Le circuit de pilotage est ici intégré dans le circuit de conversion DC/DC 303. Le convertisseur 30i est ici basé sur deux boucles fermées de régulation imbriquées. Une boucle rapide permet le contrôle du courant de sortie li. Une boucle lente régule la tension de sortie du convertisseur 30i.

Le convertisseur $30_i$ comprend un circuit de régulation 350. Le circuit de régulation 350 génère un rapport cyclique ai dont la valeur est comprise entre 0 et 1. Le circuit de régulation 350 applique sa consigne de rapport cyclique ai sur le circuit de pilotage du circuit de conversion 303.

Le circuit de régulation 350 comporte un soustracteur 351 recevant le courant li mesuré par le capteur de courant 31i sur une entrée inverseuse, et un courant Iref (détaillé par la suite) sur une entrée non inverseuse. Le soustracteur 351 génère ainsi un signal d'écart de courant δi. δi est appliqué à l'entrée d'un correcteur 352, destiné à élaborer une valeur de rapport cyclique à partir de ce signal, en limitant la valeur du rapport cyclique élaborée entre une valeur minimale et une valeur maximale. Ce correcteur 352 est par exemple du type PI (proportionnel intégral). La sortie du correcteur 352 applique le rapport cyclique ai à une entrée de commande du circuit de conversion 303.

Le circuit de régulation 350 comporte un diviseur recevant la valeur de la tension Vei en entrée, et générant en sortie une valeur de tension Vi = Vei * K1. La valeur de tension Vi est appliquée sur une entrée non inverseuse d'un soustracteur 357. Un capteur de tension 36i mesure la tension de sortie du circuit de conversion 303 et applique cette valeur de tension sur l'entrée inverseuse du soustracteur 357. Un signal d'erreur de tension δv est ainsi généré. Le signal δv est appliqué à l'entrée d'un correcteur 358 (par exemple de type PI). Le correcteur 358 génère la consigne de courant iref.

La boucle lente est active tant que la consigne de courant iref est inférieure à la valeur limax. Lorsque iref atteint la valeur limax, le courant de sortie du circuit de conversion 303 est limité à limax.

Comme dans l'exemple de la figure 7, le circuit de commande 4 fournit ici seulement un signal binaire d'activation ou de désactivation, appliqué sur une entrée d'une porte OU 355. Une autre entrée de la porte OU 355 est connectée à la sortie d'un comparateur 354. Le signal de sortie du comparateur 354 est appliqué sur le circuit de conversion 303.

Dans cet exemple, f(li)=0, on peut également prévoir une diminution du rapport cyclique appliqué sur le circuit de conversion 303, en fonction de la valeur li mesurée par le capteur 31i.

Les figures 9 et 10 illustrent des exemples de convertisseurs monodirectionnels ayant en outre une fonction d'interrupteur en série avec le circuit de conversion DC/DC. La fonction d'interrupteur permet d'isoler le convertisseur en cas de défaillance. La fonction conduction unidirectionnelle est destinée à éviter que le convertisseur, ayant une tension de sortie inférieure à celle du réseau auxiliaire ou d'un autre convertisseur auquel il est connecté, ne soit traversé par un courant vers l'étage connecté à son entrée.

Selon la figure 9, ces fonctions sont assurées dans les convertisseurs 30k et 30(k-1) par des diodes Schottky respectives 33k et 33(k-1), connectées en série entre la sortie de leur circuit de conversion et la sortie de leur convertisseur.

Selon la figure 10, ces fonctions sont assurées par un circuit connecté en série entre la sortie d'un convertisseur et la sortie de son circuit de conversion. Les convertisseurs 30k et 30(k-1) comportent ainsi des circuits respectifs 34k et 34(k-1). Chacun de ces circuits 34k et 34(k-1) comprend un transistor MOSFET commandé par un circuit de commande non illustré. Cette variante permet de limiter les pertes pour mettre en œuvre ces fonctions d'interrupteur et de conduction monodirectionnelle. L'utilisation d'un transistor MOFSET autorise également un fonctionnement bidirectionnel en courant.

L'invention s'applique avantageusement avec des dispositifs de stockage d'énergie électrique 2 incluant des accumulateurs électrochimiques dont la variation de tension à leurs bornes est importante lors d'une variation de leur charge résiduelle.

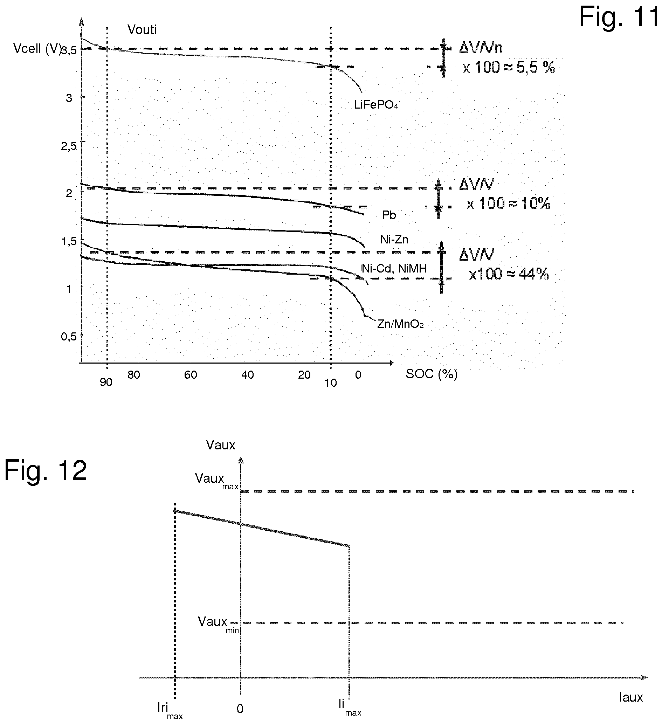

La charge et la décharge d'un accumulateur électrochimique se traduit respectivement par une croissance ou décroissance de la tension à ses bornes. La tension nominale aux bornes d'un accumulateur électrochimique est fixée par les caractéristiques électrochimiques des matériaux utilisés. La tension en fonctionnement d'un accumulateur dépend de sa tension nominale mais également du courant le traversant, de sa résistance interne, de sa température, de son vieillissement et de sa charge résiduelle. Les courbes illustrées à la figure 11 illustrent des décharges typiques pour différentes technologies d'accumulateurs électrochimiques déchargés à un courant de décharge de 0,2 C.

Un accumulateur Li-ion à base de phosphate de fer (LiFePO4 sur la figure 11) présente un niveau de tension typique qui varie peu en fonction du courant de décharge : on observe typiquement une variation de l'ordre de 5,5% par rapport à la tension nominale entre 10% et 90% de la charge résiduelle de l'accumulateur. Un accumulateur à base d'acide de plomb (Pb) présente une variation typique de la tension à ses bornes plus prononcée (environ 10%) pour cette même variation de charge. Un accumulateur alcalin à base de zinc et de dioxyde de manganèse (Zn/MnO2) présente une variation de la tension à ses bornes encore plus prononcée (environ 44%) pour cette même variation de charge. Un accumulateur Li-ion avec une électrode positive contenant du cobalt (NMC, NCA, LiCoO2...) possède une variation typique de tension à ses bornes d'environ 12% pour cette même variation de charge.

Selon un mode de fonctionnement du système d'alimentation, on réalise la recharge d'un ou des étages de la batterie. Une telle recharge d'un ou des étages peut être assurée par une décharge d'un ou plusieurs autres étages présentant un état de charge plus élevé, par l'intermédiaire de leurs convertisseurs respectifs (par exemple un convertisseur tel que détaillé en référence à la figure 6). Les convertisseurs 30i présenteront alors avantageusement également une limite de recharge Irimax. La figure 12 illustre un exemple de diagramme tension de sortie/ courant en sortie d'un tel convertisseur 30i. Il est préférable de limiter la résistance de recharge des convertisseurs 30i pour éviter les pertes lors d'un équilibrage entre étages.

Bien que non illustré, le système d'alimentation électrique 1 comprend avantageusement un dispositif de mesure et de surveillance de la tension aux bornes des étages d'accumulateurs $Et_i$.

## Revendications

1. Dispositif d'équilibrage (3) de charge d'un dispositif de stockage électrique de puissance (2) incluant plusieurs éléments de stockage électrique ($Et_1$,... $Et_k$) connectés en série, **caractérisé en ce qu'**il comprend:

   - au moins deux convertisseurs continu/continu ($30_i$) à limitation de courant et présentant chacun :

     - une entrée destinée à être connectée aux bornes d'un élément ($Et_i$) de stockage respectif ;
   - une sortie destinée à être connectée à un réseau électrique (6) ayant une tension régulée à un niveau inférieur à la tension aux bornes du dispositif de stockage (2) ;
   - une loi de transformation du type Vout=K1*Ve-f(I) pour I≤limax, avec Vout la différence de potentiel sur ladite sortie, K1 une constante, Ve la différence de potentiel sur ladite entrée, f(I) une fonction affine du courant I débité sur ladite sortie et limax la limitation de courant du convertisseur et f(limax)<K1*Ve ;
   - un fonctionnement en régulation de courant lorsque I atteint limax.

2. Dispositif (3) d'équilibrage de charge d'un dispositif de stockage d'énergie électrique de puissance selon la revendication 1, dans lequel chacun desdits convertisseurs inclut un circuit de mesure du courant qu'il débite sur sa sortie.

3. Dispositif (3) d'équilibrage de charge d'un dispositif de stockage d'énergie électrique de puissance selon la revendication 2, chacun desdits convertisseurs comprend un circuit de régulation appliquant ladite loi de transformation en fonction du courant mesuré.

4. Dispositif (3) d'équilibrage de charge d'un dispositif de stockage d'énergie électrique de puissance selon la revendication 2 ou 3, chacun desdits convertisseurs comprend une inductance (Ls) connectée à sa sortie et comprend un circuit de régulation maintenant le convertisseur en régime de condition continue tant que le courant débité sur la sortie est inférieur à limax.

5. Dispositif d'équilibrage de charge d'un dispositif de stockage d'énergie électrique de puissance selon l'une quelconque des revendications précédentes, dans lequel K1 est une constante dont la valeur est comprise entre 0 et 1.

6. Dispositif d'équilibrage de charge d'un dispositif de stockage d'énergie électrique de puissance selon l'une quelconque des revendications précédentes, dans lequel f(I) < 0,1 * K1*Ve.

7. Dispositif d'équilibrage de charge d'un dispositif de stockage d'énergie électrique de puissance selon l'une quelconque des revendications précédentes, dans lequel lesdits convertisseurs sont de type bidirectionnel en courant.

8. Dispositif d'équilibrage de charge d'un dispositif de stockage d'énergie électrique de puissance selon la revendication 7, dans lequel lesdits convertisseurs incluent chacun un transformateur (TPM) dont un enroulement primaire (EP) est connecté en pont entre quatre interrupteurs commandés en modulation de largeur d'impulsion.

9. Dispositif d'équilibrage de charge selon la revendication 8, dans lequel ledit transformateur (TPM) est un transformateur à point milieu dont un enroulement secondaire (ES) est connecté entre deux interrupteurs commandés, l'enroulement secondaire (ES) comportant un point milieu connecté à une sortie de son convertisseur.

10. Dispositif (3) d'équilibrage de charge d'un dispositif de stockage d'énergie électrique de puissance selon l'une quelconque des revendications précédentes, dans lequel f(I) est une fonction affine strictement positive lorsque la sortie du convertisseur correspondant débite un courant.

11. Dispositif d'équilibrage de charge selon l'une quelconque des revendications précédentes, dans lequel les valeurs K1, limax et la fonction f(I) sont identiques pour chacun desdits convertisseurs continu/continu.

12. Système (1) d'alimentation électrique, comprenant :

- un dispositif d'équilibrage de charge (3) selon l'une quelconque des revendications précédentes ;
- un dispositif de stockage (2) électrique de puissance incluant plusieurs éléments de stockage électrique, ces éléments étant connectés à des convertisseurs respectifs du dispositif d'équilibrage de charge (3) ;
- un réseau électrique (6) connecté à la sortie du dispositif d'équilibrage de charge et ayant une tension régulée à un niveau inférieur à la tension aux bornes du dispositif de stockage (2).

13. Système selon la revendication 12, dans lequel lesdits éléments de stockage électrique sont des accumulateurs électrochimiques dans lesquels la variation de tension entre 90 et 10% de leur état de charge est au moins égale à 10% de leur tension nominale.

**Patentansprüche**

1. Vorrichtung zum Ausgleich (3) der Ladung einer elektrischen Leistungsspeichervorrichtung (2) mit mehreren in Reihe geschalteten elektrischen Speicherelementen ($Et_1$, ... $Et_k$), **dadurch gekennzeichnet, dass** sie Folgendes aufweist:

- mindestens zwei DC/DC-Wandler ($30_i$) mit Strombegrenzung, von denen jeder Folgendes aufweist:

- einen Eingang, der dazu bestimmt ist, an die Klemmen eines jeweiligen Speicherelements ($Et_i$) angeschlossen zu werden;
- einen Ausgang, der dazu bestimmt ist, an ein elektrisches Netz (6) angeschlossen zu werden, dessen Spannung auf einen Pegel geregelt ist, der niedriger ist als die Spannung an den Anschlüssen der Speichervorrichtung (2);
- ein Transformationsgesetz vom Typ Vout=K1*Ve-f(I) für I≤limax, wobei Vout die Potentialdifferenz an dem Ausgang ist, K1 eine Konstante ist, Ve die Potentialdifferenz an dem Eingang ist, f(I) eine affine Funktion des Stroms I ist, der an dem Ausgang abgegeben wird, und limax die Strombegrenzung des Wandlers ist und f(limax)<K1*Ve ist;
- einen Stromregelungsbetrieb, wenn I den Wert limax erreicht.

2. Vorrichtung (3) zum Ausgleich der Ladung einer elektrischen Leistungsspeichervorrichtung nach Anspruch 1, wobei jeder der Wandler eine Schaltung zum Messen des Stroms aufweist, der an seinem Ausgang abgegeben wird.

3. Vorrichtung (3) zum Ausgleich der Ladung einer elektrischen Leistungsspeichervorrichtung nach Anspruch 2, wobei jeder der Wandler eine Schaltung zum Regeln aufweist, die das Transformationsgesetz in Abhängigkeit vom gemessenen Strom anwendet.

4. Vorrichtung (3) zum Ausgleich der Ladung einer elektrischen Leistungsspeichervorrichtung nach Anspruch 2 oder 3, wobei jeder der Wandler eine Induktivität (Ls) aufweist, die an seinem Ausgang angeschlossen ist, und eine Schaltung zum Regeln aufweist, die den Wandler im Dauerbetrieb hält, solange der am Ausgang abgegebene Strom unter dem Wert limax liegt.

5. Vorrichtung zum Ausgleich der Ladung einer elektrischen Leistungsspeichervorrichtung nach einem der vorhergehenden Ansprüche, wobei K1 eine Konstante ist, deren Wert zwischen 0 und 1 liegt.

6. Vorrichtung zum Ausgleich der Ladung einer elektrischen Leistungsspeichervorrichtung nach einem der vorhergehenden Ansprüche, wobei f(I) < 0,1*K1*Ve.

7. Vorrichtung zum Ausgleich der Ladung einer elektrischen Leistungsspeichervorrichtung nach einem der vorhergehenden Ansprüche, wobei die Wandler vom Typ bidirektionaler Stromwandler sind.

**8.** Vorrichtung zum Ausgleich der Ladung einer elektrischen Leistungsspeichervorrichtung nach Anspruch 7, wobei die Wandler jeweils einen Transformator (TPM) enthalten, von dem eine Primärwicklung (EP) in einer Brücke zwischen vier über Pulsweitenmodulation gesteuerte Schalter angeschlossen ist.

**9.** Vorrichtung zum Ausgleich der Ladung nach Anspruch 8, wobei der Transformator (TPM) ein Transformator mit Mittelanzapfung ist, von dem eine Sekundärwicklung (ES) zwischen zwei gesteuerten Schaltern angeschlossen ist, wobei die Sekundärwicklung (ES) eine Mittelanzapfung aufweist, die an einen Ausgang des zugehörigen Wandlers angeschlossen ist.

**10.** Vorrichtung (3) zum Ausgleich der Ladung einer elektrischen Leistungsspeichervorrichtung nach einem der vorhergehenden Ansprüche, wobei f(I) eine streng positive affine Funktion ist, wenn der Ausgang des entsprechenden Wandlers Strom abgibt.

**11.** Vorrichtung zum Ausgleich der Ladung nach einem der vorhergehenden Ansprüche, wobei die Werte K1, limax und die Funktion f(I) für jeden der DC/DC-Wandler identisch sind.

**12.** Stromversorgungssystem (1), das Folgendes aufweist:

- eine Vorrichtung (3) zum Ausgleich der Ladung nach einem der vorhergehenden Ansprüche;
- eine elektrische Leistungsspeichervorrichtung (2) mit mehreren elektrischen Speicherelementen, wobei diese Elemente an die jeweiligen Wandler der Vorrichtung zum Ausgleich der Ladung (3) angeschlossen sind;
- ein elektrisches Netz (6), das an die Vorrichtung zum Ausgleich der Ladung angeschlossen ist und dessen Spannung auf einen Pegel geregelt ist, der niedriger ist als die Spannung an den Anschlüssen der Speichervorrichtung (2).

**13.** System nach Anspruch 12, wobei die elektrischen Speicherelemente elektrochemische Akkumulatoren sind, bei denen die Spannungsänderung zwischen 90 und 10 % ihres Ladezustands mindestens 10 % ihrer Nennspannung beträgt.

**Claims**

**1.** Device for balancing (3) the charge of an electric power storage device (2) including a plurality of electrical storage elements ($Et_1,... Et_k$) connected in series, **characterized in that** it comprises:

- at least two current-limiting DC/DC converters ($30_i$) each having:

  ◦ an input intended to be connected to the terminals of a respective storage element ($Et_i$);
  ◦ an output intended to be connected to an electrical network (6) having a voltage regulated at a lower level than the voltage across the terminals of the storage device (2);
  ◦ a transformation law of the type Vout=K1*Ve-f(I) for I≤limax, where Vout is the potential difference at said output, K1 is a constant, Ve is the potential difference at said input, f(I) is an affine function of the courant I drawn at said output and limax is the current limitation of the converter and f(limax)<K1*Ve;
  ◦ an operation for regulating the current once I reaches limax.

**2.** Device (3) for balancing the charge of an electrical energy power storage device according to Claim 1, in which each of said converters includes a circuit for measuring the current which it draws at its output.

**3.** Device (3) for balancing the charge of an electrical energy power storage device according to Claim 2, each of said converters comprises a regulating circuit applying said transformation law as a function of the measured current.

**4.** Device (3) for balancing the charge of an electrical energy power storage device according to Claim 2 or 3, each of said converters comprises an inductor (Ls) connected at its output and comprises a regulating circuit maintaining the converter in continuous-conduction mode for as long as the current drawn at the output is lower than limax.

**5.** Device for balancing the charge of an electrical energy power storage device according to any one of the preceding claims, in which K1 is a constant the value of which is of between 0 and 1.

**6.** Device for balancing the charge of an electrical energy power storage device according to any one of the preceding claims, in which f(I) < 0.1 * K1*Ve.

**7.** Device for balancing the charge of an electrical energy power storage device according to any one of the preceding claims, in which said converters are of bidirectional current type.

**8.** Device for balancing the charge of an electrical energy power storage device according to Claim 7, in which said converters each include a transformer (TPM) a primary winding (EP) of which is connected in a bridge between four switches controlled by pulse-width modulation.

9. Device for balancing charge according to Claim 8, in which said transformer (TPM) is a center-tapped transformer a secondary winding (ES) of which is connected between two controlled switches, the secondary winding (ES) comprising a center tap connected to an output of its converter.

10. Device (3) for balancing the charge of an electrical energy power storage device according to any one of the preceding claims, in which f(I) is an affine function which is strictly positive when the output of the corresponding converter draws a current.

11. Device for balancing charge according to any one of the preceding claims, in which the values K1, Iimax and the function f(I) are identical for each of said DC/DC converters.

12. Electrical power supply system (1), comprising:

- a device for balancing charge (3) according to any one of the preceding claims;
- an electrical power storage device (2) including a plurality of electrical storage elements, these elements being connected to respective converters of the device for balancing charge (3);
- an electrical network (6) connected to the output of the device for balancing charge and having a voltage regulated at a lower level than the voltage across the terminals of the storage device (2).

13. System according to Claim 12, in which said electrical storage elements are electrochemical accumulators in which the variation of voltage between 90 and 10% of their charge state is at least equal to 10% of their nominal voltage.

EP 3 036 818 B1

Fig. 1

Fig. 2

**Fig. 3**

**Fig. 4**

**Fig. 5**

Fig. 6

Fig. 7

EP 3 036 818 B1

Fig. 8

355
354
4
Veimin
Eti
Vei
357
Vi δv 358 351 352 αi
iref δi
356
350

303
31i 36i
li
li
302
6

Fig. 9

33k
303k
33(k-1)
303(k-1)
vaux

Fig. 10

34k
303k
303(k-1)
34(k-1)
vaux

15

Fig. 11

Fig. 12

**EP 3 036 818 B1**

## RÉFÉRENCES CITÉES DANS LA DESCRIPTION

### Documents brevets cités dans la description

- FR 2982090
- US 2005017682 A